Europäisches Patentamt

European Patent Office

Office européen des brevets

(11) Publication number: **0 093 558**
**B1**

(12) **EUROPEAN PATENT SPECIFICATION**

(45) Date of publication of patent specification: **18.12.85**

(51) Int. Cl.⁴: **B 23 Q 11/00,** G 01 N 3/58

(21) Application number: **83302317.9**

(22) Date of filing: **22.04.83**

(54) **Apparatus for detecting a likely abnormality of the cutting tool beforehand.**

(30) Priority: **23.04.82 JP 69354/82**

(43) Date of publication of application:
**09.11.83 Bulletin 83/45**

(45) Publication of the grant of the patent:
**18.12.85 Bulletin 85/51**

(84) Designated Contracting States:
**CH DE FR GB IT LI SE**

(56) References cited:
GB-A-2 051 362
JP-A-55 101 305
US-A-2 978 689
US-A-4 090 403

Patent Abstracts of Japan vol. 1, no. 5, 11
March 1977 page 506M76
Patent Abstracts of Japan vol. 1, no. 109, 24
September 1977 page 3341M77
Patent Abstracts of Japan vol. 4, no. 76, 3 June
1980 page 44M14
Patent Abstracts of Japan vol. 4, no. 154, 28
October 1980 page 129M38

(73) Proprietor: **Kakino, Yoshiaki**
**256-5 Hanazonocho Iwakura**
**Sakyoku Kyoto (JP)**

(73) Proprietor: **SHOWA SEIKI KABUSHIKI KAISHA**
**7-18 Imazaikecho**
**Toyonakashi Osaka (JP)**

(72) Inventor: **Kakino, Yoshiaki**
**256-5 Hanazonocho Iwakura**
**Sakyoku Kyoto (JP)**

(74) Representative: **Cook, Anthony John et al**
**D. YOUNG & CO. 10, Staple Inn**
**London, WC1V 7RD (GB)**

(56) References cited:
**Patent Abstracts of Japan vol. 5, no. 143, 9**
**September 1981**
**Patent Abstracts of Japan vol. 4, no. 147, 16**
**October 1980 page 144M36**

Courier Press, Leamington Spa, England.

## Description

The invention relates to an apparatus for detecting an abnormality such as breakage of a cutting tool in operation so as to take a precautionary measure as to stop the operation or slow down the cutting speed.

In line with the recent development of technology there has been a strong demand for a labour-saving or automated operation in every field of the industry. This is no exception to the metal machining process. In the automated metal machining process it is essential to detect an abnormality, such as breakage, occurring on the cutting tool in operation to prevent a more serious trouble. In this specification such a detection will be referred to as the in-process detection.

It is known in the art to utilize an acoustic emission e.g. JP—A—52—48183, hereinafter referred to as "AE", spontaneously generated when the tool in operation is actually broken or damaged, so as to become aware of the abnormality. In response to the detection the cutting operation is immediately suspended. In general, the level of the "AE" signal is so high as to effect the in-process detection of abnormalities. However, this method is only applicable when the tool in operation is actually broken or damaged, and not to detecting a likely trouble on the tool beforehand. In order to improve the situation, one proposal is to utilize the "AE" generated as symptom of breakage of the tool. In this case, however, the level of the "AE" is so low that it is difficult to detect effectively. Even if it is detected, a certain period of time lapses before the main spindle driving the cutting tool comes to a standstill. This negates the effect of the immediate precautionary measure taken in response to the reception of the "AE".

In most cases rotary cutting tools, such as drills, taps and end mills, are more liable to complete breakage of cutting tips and/or seizure than to partial breakage. If a broken tool or part thereof is mixed with the workpieces, it is likely to cause serious trouble. If it is fortunately found beforehand, it will be laborious to get rid of the broken parts. In general a cutting operation goes on over a relatively long period of time, and it is desirable not only to effect the in-process detection of an abnormality on the cutting tool but also to carry out an immediate counteracting action to protect the cutting tool. One way to do this is to employ a torque limiter whereby the tool in operation is protected against a detrimental overload. However, the simple employment of a torque limiter calls for the constant attendance of an operator; if no operator is present the torque limiter is liable to damage, since it is not indefinitely durable. Thus, simple use of a torque limiter is not appropriate for an automated cutting process. Nevertheless, the use of a torque limiter combined with an appropriate photoelectric detecting signal is known from documents JP—A—55—101305 and JP—A—55—101306.

A further method for anticipating a breakage of a cutting tool in operation involves utilizing variations in the electric current loaded to the tool-driving electric motor e.g. US—A—4090403, and in fact this method is found to be effective for drills having a diameter of 10 to 20 millimetres, but not suitable for drills having a diameter of 9 mm. or less, which are most liable to breakage. This is because of the current variations becoming too small to detect in all-purpose machine tools.

There is another method in which a strain gauge is attached to the tool holder or the main spindle so as to detect any variation in the cutting strain or the ratio of component stress forces in the tool (or tool holder) in perpendicular directions e.g., US—A—2978689. By doing this, an abnormality occuring on the cutting tool, such as breakage, is detected. However, this method is not applicable for cutting tools having relatively small diameters, because in such cases the load applied to the cutting tool is too minute, and the likely variation of the cutting strain (or stress) is too small to detect.

As evident from the foregoing, it is particularly difficult to effect the in-process detection when the diameters of the cutting tools are small. As a result, according to the present procedures, automated processes have to be designed so that small diameter cutting tools are not used.

It would be desirable to have a simple and easily-operated apparatus for detecting a likely abnormality of the cutting tool beforehand, the apparatus being applicable not only to the cutting tool having large diameters but also to the ones having small diameters.

According to the invention, there is provided an apparatus for detecting an abnormality of a cutting tool beforehand, comprising: means for generating an elastic wave having an amplitude higher than a given level in response to an overload being applied to the cutting tool, the generating means being provided in use in a tool holder or in a head portion of an associated spindle, a detector for receiving the elastic wave, the detector being constructed to produce an output in use after the elastic wave has been separated from extraneous noise, and means for signalling a warning and effecting an action to protect the cutting tool in response to the output transmitted from the detector.

An elastic wave is any wave which travels through a solid body when the body is deformed to produce oscillations. An acoustic wave is an example of an elastic wave.

An example of the invention is diagrammatically illustrated by way of example with reference to the accompanying drawings, in which:—

Figure 1 shows an apparatus according to the invention in a diagrammatic form; and

Figure 2 is a diagram showing the results of an experiment carried out on the apparatus of the invention.

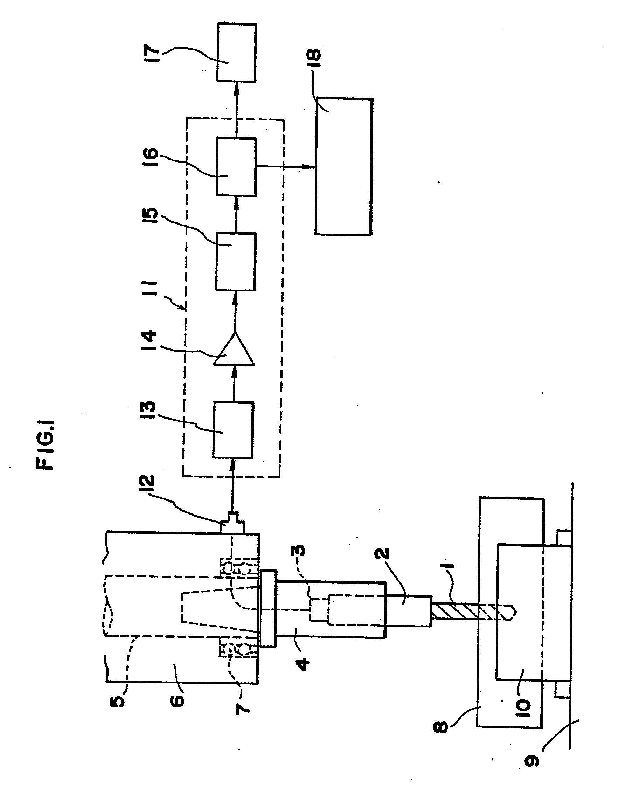

Referring to the drawings, a rotary cutting tool 1, such as a drill, is held on a holder 2, which has a torque limiter 3 at its rear end. The tool holder 2 and the torque limiter 3 are mounted in a tool post 4, which is detachably connected to an associated spindle 5. The cutting tool 1 is driven by the associated spindle 5. The reference numeral 6 designates a head portion of the associated spindle 5, and the reference numeral 7 designates a bearing for receiving the main spindle 5. Figure 1 shows that the cutting tool 1 is drilling a hole in a workpiece 8 held by a vice 10 placed on a table 9.

The reference numeral 11 designates a detector whereby any symptom of tool breakage is watched. The detector 11 includes a detecting section 12, a high path-filter 13, an amplifier 14, a mean value detector 15, and an amplitude discriminator 16. The detecting section 12 is connected to the head portion 6 of the associated spindle 5.

The detection section 12 is a transducer which converts a high frequency elastic (acoustic, supersonic) wave to a high frequency electric signal. The reference numerals 17 and 18 designate a warning signal generator and a controller for controlling the machine tool (not shown), respectively.

If the tool 1 is in danger of breakage due to an overload caused by the clogging of cuttings or seizure while in operation, the torque limiter 3 repeats the engagement and disengagement, thereby generating an elastic wave including a supersonic wave oscillation of a relative large amplitude. This elastic wave is transmitted to the head portion 6 of the associated spindle 5 through the tool post 4 and the bearing 7, and is detected in the detecting section 12. At this stage, however, the elastic wave includes noise and vibration generated by the tool 1, the tool holder 2, the tool post 4 and the bearing 7, and they are removed by the high path-filter 13. Then the elastic wave is amplified by the amplifier 14, and a mean value is detected by the detector 15. The detected value is then compared with a threshold set by the amplitude discriminator 16. If the signal exceeds the threshold, a warning signal is emitted by the warning signal generator 17, and the controller 18 emits a step-back instruction, in response to which the associated spindle head portion 6 is withdrawn so as to enable the cutting tool 1 to ascend. In this way the cutting operation is stopped, and the cutting tool 1 is saved from being broken. If the situation is that the controller 18 must emit the step-back instructions more often than a given times for a unit period of time, the controller 18 emits a signal informing of the fact that the cutting tool 1 has an expiring life. A step must be taken to replace it with a new tool.

The invention will be explained in greater detail by way of example:

Example

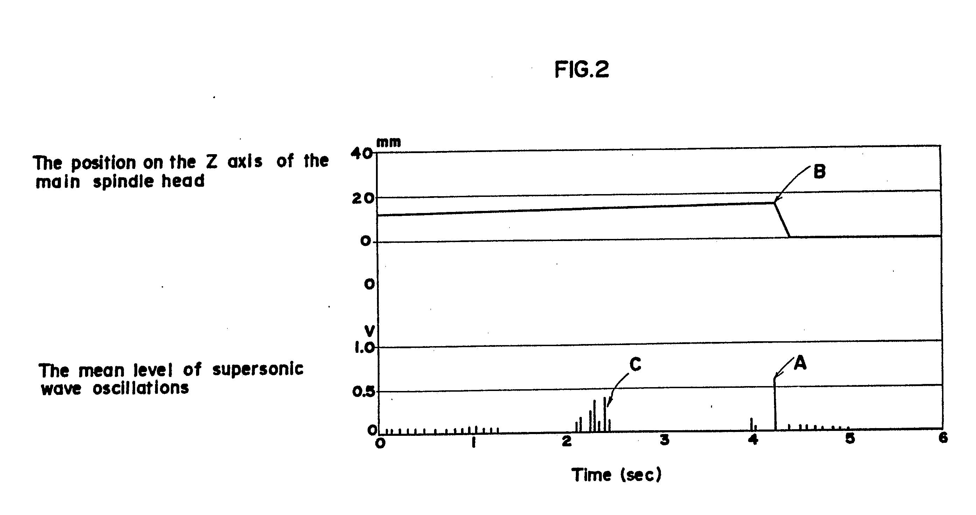

Referring to Figure 2, the test was carried out on the following conditions:

The cutting tool: A 5 mm drill (SKH$_4$).

The workpiece: A structural carbon steel (S45C), hardened to 26 HRC.

The R.P.M. of the main spindle: 500 rpm.

The feed of the main spindle: 100 mm/min.

The position of the detecting section: The head of the main spindle.

The high path-filter: 100 KHz.

The gain of the amplifier: 56$^{dB}$.

The threshold of the amplitude discriminator: 0.5 V.

The load set for the torque limiter: 0.2 Kg.m.

At the time indicated by the arrow (A) after the cutting operation was started, the torque (moment) exerting on the drill exceeded the predetermined value 0.2 Kg.m. As a result, the torque limiter 3 was performed and generated a supersonic wave oscillation of a relatively large amplitude. This oscillation was detected in the detecting section 12, and passed through the high path-filter 13. After having been amplified by the amplifier 14, the signal was processed by the mean value detector 15 to obtain its mean value (0.6 V), which was compared with the threshold (0.5 V). In response to it, the controller 18 emitted a step-back instruction to the main-spindle head through the amplitude discriminator 16. As shown in Figure 2, the main-spindle head was withdrawn from the position indicated by the arrow (B). In this way the drill was saved from being broken. At the time indicated by the arrow (C) the mean value was still below 0.5 V, but the signal was discerned. It proved that the oscillation was generated due to the clogging of cutting tips, not by the torque limiter.

The invention can be applied to the tapping operation with the use of a tap or to any other cutting, shaping or piercing operations. In the example given above a supersonic wave oscillation was utilized, but the medium is not limited thereto but elastic waves which are commonly called or classified as vibration or sound, can be effectively utilized.

**Claims**

1. An apparatus for detecting an abnormality of a cutting tool (1), comprising means (3) for generating an elastic wave having a level higher than a given level in response to an overload applied to the cutting tool (1), the means (3) being provided in use in a tool holder or in a head portion of an associated spindle, a detector (12) for receiving the elastic wave outside the cutting section, the detector (12) producing an output after the elastic wave has been separated from extraneous noise, and means for signalling a warning and effecting an action to protect the cutting tool in response to the output transmitted from the detector.

2. An apparatus according to claim 1, wherein the action to protect the cutting tool is a step-back movement of the cutting tool.

3. An apparatus according to claim 2, further comprising means for signalling that the cutting tool should be replaced with a new one when the step-back movements are repeated more often than a given times for a unit period of time.

4. An apparatus according to claim 1 or 2, wherein the means for generating the elastic wave is a torque limiter.

## Revendications

1. Appareil pour détecter une anomalie d'un outil de coupe (1), comprenant un moyen (3) pour générer une onde élastique dont le niveau est supérieur à un niveau donné en réponse à une surcharge appliquée à l'outil de coupe (1), le moyen (3) étant disposé en cours d'utilisation dans un porte outil ou dans une partie de tête d'un arbre associé, un détecteur (12) pour recevoir l'onde élastique à l'extérieur de la partie coupante, le détecteur (12) produisant un signal de sortie après que l'onde élastique ait été séparée du bruit étranger, et un moyen pour signaler un avertissement et effectuer une action pour protéger l'outil de coupe en réponse au signal de sortie transmis à partir du détecteur.

2. Appareil selon la revendication 1, dans lequel l'action pour protéger l'outil de coupe est un retour en arrière de l'outil de coupe.

3. Appareil selon la revendication 2, comprenant en outre un moyen pour signaler que l'outil de coupe doit être remplacé par un outil neuf, lorsque les mouvements de retour en arrière sont répétés plus souvent qu'un nombre donné de fois dans une unité de temps.

4. Appareil selon les revendications 1 ou 2 dans lequel le moyen pour générer l'onde élastique est un limiteur de couple.

## Patentansprüche

1. Vorrichtung zum Erkennen einer Anomalie eines Schneidwerkzeuges (1) welche Einrichtungen zur Erzeugung einer elastischen Welle aufweist, die als Reaktion auf eine am Schneidwerkzeug (1) angreifende Überlast eine höhere als eine vorgegebene Intensität hat, wobei diese Einrichtungen (3) während des Gebrauchs in einem Werkzeughalter oder in einem Kopteil einer zugehörigen Spindel vorgesehen sind, mit einem Anzeigeinstrument (12) zum Empfang der elastischen Welle außerhalb des Schneidbereiches, wobei das Anzeigeinstrument (12) ein Anzeigesignal hervorruft, nachdem die elastische Welle von nicht zugehörigem Rauschen getrennt ist, und Einrichtungen, die ein Warnsignal abgeben und eine Maßnahme zum Schutz des Schneidwerkzeuges in Abhängigkeit von dem Ausgangssignal, welches von dem Anzeigeinstrument übermittelt wird, bewirken.

2. Vorrichtung nach Anspruch 1, wobei die Maßnahme zum Schutz des Schneidwerkzeuges eine stufenweise Rückwärtsbewegung des Schneidwerkzeuges ist.

3. Vorrichtung nach Anspruch 2, welche weiterhin Einrichtungen aufweist, die anzeigen, daß das Schneidwerkzeug durch ein neues ersetzt werden muß, wenn die stufenweisen Rückwärtsbewegungen während einer Zeitenheit öfter als vorgegeben wiederholt werden.

4. Vorrichtung nach Anspruch 1 oder 2, wobei die Einrichtungen zur Erzeugung der elastischen Welle ein Drehmomentbegrenzer sind.

FIG.1

## FIG.2

The position on the Z axis of the main spindle head

The mean level of supersonic wave oscillations

mm
40
20
0

V
1.0
0.5
0

B

C

A

Time (sec)

0 093 558